# EUROPEAN PATENT APPLICATION

(11) **EP 4 570 071 A1**
(43) Date of publication of application: **18.06.2025**
(21) Application number: 23307226.3
(22) Date of filing: 15.12.2023
(51) Int. Cl.: A01N 63/32, A01P 21/00

(54) **METHOD AND COMPOSITION TO STIMULATE PLANT DEVELOPMENT IN THE PRESENCE OF OR AFTER AN ABIOTIC STRESS**

(71) Applicant: Danstar Ferment AG, 6300 Zug (CH)
(72) Inventor: COR, Olivier, Saint Jean de Boiseau (FR); MENDES FERNANDES, Wederson, Patos de Minas, Minas Gerais (BR); BURNIER OLIVEIRA, Cleiton, Patos de Minas, Minas Gerais (BR)
(74) Representative: J A Kemp LLP

(57) **Abstract**

A method for stimulating the development or increasing biomass or yield of a plant in the presence of or after at least one abiotic stress comprising contacting a plant, a plant part or soil with a yeast extract.

## Description

### TECHNOLOGICAL FIELD

The present disclosure relates to the field of plant response to stress and provides method and composition for stimulating the development, increasing biomass or yield of plants in the presence of or after at least one abiotic stress.

### BACKGROUND

Abiotic stresses (or environmental stresses) negatively impact the growth and development of plants and result in significant reductions in crop yield and quality. Abiotic stresses, for example, include excessive or insufficient light intensity, cold temperature resulting in freezing or chilling, warm or high temperature, drought, ozone, salinity, toxic metals, toxic chemical pollution, nutrient poor soils, hail and other weather hazards and the like. Stress caused by climate change has led to increased agricultural losses and threatened global food security. Drought is considered the most damaging environmental stress, which directly affects the entire growth period of plant seeds from germination to final fruiting^{.} Drought stress can lead to increased plant osmotic regulators, the inhibition of photosynthesis, and the change of plant endogenous hormone content.

A number of strategies or compounds enable plants to tolerate abiotic stress. These strategies are often used ahead of an abiotic stress in order to prepare plants for a superior tolerance.

The present disclosure overcomes shortcomings in the art by providing methods and compositions useful to stimulate the development of a plant in the presence of or after an abiotic stress.

### BRIEF SUMMARY

The present disclosure provides a method and composition for stimulating plant development, increasing biomass or yield of a plant in the presence of or after at least one abiotic stress comprising the use of a yeast extract. Contacting the plant with the composition of the present disclosure comprising a yeast extract after the plant has experienced an abiotic stress reduces the effects of said abiotic stress in the plant and/or stimulates plant development or increase biomass or yield of the plant compared to an untreated plant. The present disclosure provides a method for accelerating the recovery of injured plants or the recovery of plants after an abiotic stress, comprising contacting a plant and/or part thereof with the composition of the present disclosure during or after the stress thereby accelerating the recovery of stressed or injured plant thereof as compared to a control plant that has not been contacted with the composition of the present disclosure.

In an embodiment of the invention, the present disclosure relates to a method or use for stimulating the development or increasing biomass or yield of a plant in the presence of or after at least one abiotic stress comprising contacting a plant, a plant part or soil with a yeast extract. In an embodiment, the yeast extract is a hydrolyzed yeast extract, wherein preferably, the hydrolyzed yeast extract is obtained by an enzymatic hydrolysis of the yeast extract. The enzymatic hydrolysis can be carried out with a peptidase or a protease. In an embodiment, the yeast extract is obtained from yeasts of the genus Saccharomyces and preferably from the species *S*. *cerevisiae.* In a preferred embodiment, the yeast extract is contacted with the plant after the abiotic stress occurred. In an embodiment, the plant is soybean plant, cotton, common beans, coffee, mango, or grapes, preferably the plant is soybean plant. In an embodiment, the abiotic stress is a water stress. In a further embodiment, the contacting is carried out at a dose of between 0,25 L/ha to 5 L/ha.

### FIGURES

Having thus generally described the nature of the invention, reference will now be made to the accompanying drawings, showing by way of illustration, a preferred embodiment thereof, and in which:
Figure 1 illustrates the climatic data recorded during the trial.
Figure 2 illustrates the effect of the hydrolyzed yeast extract on the nitrogen balance in the phenological stage R₃.
Figure 3 illustrates the effect of the hydrolyzed yeast extract on the soybean yield.

### DETAILED DESCRIPTION

The present disclosure concerns the use of a yeast extract (such as a hydrolyzed yeast extract) as an active ingredient to stimulate the development of plants, increase biomass or yield of a plant in the presence of or after at least one abiotic stress and/or for reducing the consequence of stress in a plant and/or a plant part thereof as compared to a control plant that has not been contacted with the yeast extract of the present disclosure.

The yeast extract of the present disclosure can be made using many yeast strains, including yeast strains of the genus *Saccharomyces* like wine and beer yeast strains, baker's yeast strains and probiotic yeast strains. Yeast can be from primary grown as well as spent yeast from fermentation processes (e.g. from the brewing and/or bioful industries). Other suitable yeast strains include *non-Saccharomyces* genus, as for example, but not limited to *Kluyveromyces, Hanseniaspora, Metschnikowia, Pichia, Starmerella, Torulaspora, Candida, Brettanomyces, Schizosaccharomyces* or *Lachancea.* In an embodiment, the yeast extract of the present disclosure is made of a yeast of the genus *Saccharomyces.* In an embodiment, the yeast species used is *Saccharomyces cerevisiae.*

The term "yeast extract" as used in the context of the present disclosure refers to the content of the yeast cells, said content being obtained by any suitable extraction method known to those skilled in the art. According to one embodiment, the yeast extract according to the disclosure is obtained by a process selected from the group comprising plasmolysis, autolysis, the combination of plasmolysis and autolysis, preferably autolysis. Advantageously, a proteolytic enzyme may be added during the extraction process to increase the efficiency of said process. The term "yeast fraction" covers substances obtained by separation of the yeast cell walls and the rest of the yeast cell; the term "yeast extract" corresponds to the soluble content of the yeast cells excluding the cell walls.

In a preferred embodiment, the yeast extract of the present invention is a hydrolyzed yeast extract. To produce the hydrolyzed yeast extract of the present disclosure, a yeast extract is subjected to an enzymatic hydrolysis with a peptidase or a protease. The hydrolysis of the soluble yeast extract may be performed at a temperature of 40°C to 60°C for 5 to 15 hours at a pH of 4.5 to 6.5 under constant stirring. After the hydrolysis period, the temperature is raised to 70-75°C to inactive the enzymes.

The yeast extract (e.g. the hydrolyzed yeast extract) described in the present disclosure can be formulated according to methods known to those skilled in the art. For example, the yeast hydrolysate obtained by the methods taught herein, being an aqueous suspension, may be centrifuged and/or filtered by means of micro- or ultrafiltration techniques.

The yeast extract (e.g. the hydrolyzed yeast extract) of the present disclosure may further comprise an agricultural acceptable carrier or may be used as is. An agriculturally acceptable carrier of the present disclosure can include natural or synthetic, organic or inorganic material which is combined with the yeast extract material of the present disclosure to facilitate its application to the plant and/or plant part thereof or soil. In some embodiments, an agriculturally-acceptable carrier of the present disclosure can include, but is not limited to, a support, filler, dispersant, emulsifier, wetter, adjuvant, solubilizer, colorant, tackifier, binder, anti-foaming agent and/or surfactant, or combinations thereof, that can be used in agricultural formulations. Suitable agriculturally acceptable carriers contemplated in the present disclosure are well known to the person skilled in the art. In an embodiment, the composition of the present disclosure is in liquid form.

The composition or the yeast extract such as a hydrolyzed yeast extract of the present disclosure can be applied to a plant and/or plant part thereof or soil any time during (i.e. in the presence of) or after that the plant is exposed to an abiotic stress. The composition of the present disclosure can be applied to a plant and/or plant part any time after injury caused by an abiotic stress has occurred. In an embodiment, the composition of the present disclosure is applied to the plant and/or plant part immediately after an abiotic stress occurs. The present disclosure provides a method for accelerating the recovery of injured plant and/or plant part or the recovery of plants in general under an abiotic stress, comprising contacting a plant and/or part thereof with the composition of the present disclosure thereby accelerating the recovery of stressed or injured plant thereof as compared to a control plant that has not been contacted with the composition of the present disclosure. In another embodiment, the present disclosure provides a method for accelerating the recovery of injured plant and/or plant part or the recovery of plants after an abiotic stress, comprising contacting a plant and/or part thereof with the composition of the present disclosure during or after the plant the stress thereby accelerating the recovery of stressed or injured plant thereof as compared to a control plant that has not been contacted with the composition of the present disclosure.

As discussed above, stress (i.e. abiotic stress) includes, but is not limited to, cold temperature, freezing, chilling, heat or high temperature, drought (i.e. water stress), high light intensity, salinity, ozone, hail and other weather hazards and/or combinations thereof. In an embodiment of the present disclosure, the abiotic stress is drought (or desiccation or dehydration stress or water stress). The abiotic stress can also be heat (or thermal stress or high temperature). In some embodiments of the disclosure, the term abiotic stress refers to a combination of stresses as, for example, drought and high temperature, drought and salinity and the like.

The method and composition of the present disclosure are useful for any type of plant and/or part thereof exposed to an abiotic stress. Non-limiting examples of types of plants useful with this invention include woody, herbaceous, horticultural, agricultural, forestry, nursery, ornamental plant species and plant species useful in the production of biofuels, and combinations thereof. In some embodiments, a plant useful with the present disclosure includes, but is not limited to, *Arabidopsis,* vines, apple, tomato, pear, pepper (Capsicum), bean (e.g., green and dried), cucurbits (e.g., squash, cucumber, honeydew melon, watermelon, cantaloupe, and the like), papaya, mango, pineapple, avocado, stone fruits (e.g., plum, cherry, peach, apricot, nectarine, and the like), grape (wine and table), strawberry, raspberry, blueberry, mango, cranberry, gooseberry, banana, fig, citrus (e.g., clementine, kumquat, orange, grapefruit, tangerine, mandarin, lemon, lime, and the like), nuts (e.g., hazelnut, pistachio, walnut, macadamia, almond, pecan, and the like), lychee (Litchi), soybeans, corn, sugar cane, camelina, peanuts, cotton, canola, oilseed rape, sunflower, rapeseed, alfalfa, timothy, tobacco, tomato, sugarbeet, potato, pea, carrot, cereals (e.g., wheat, rice, barley, rye, millet, sorghum, oat, triticale, and the like), buckwheat, quinoa, turf, lettuce, roses, tulips, violets, basil, oil palm, elm, ash, oak, maple, fir, spruce, cedar, pine, birch, cypress, coffee, miscanthus, switchgrass, cocoa and combinations thereof. In a preferred embodiment, the plant can be soybean, cotton, common beans, coffee, mango or grapes.

The method and composition of the present disclosure stimulates the development of plants, increase biomass or yield of a plant in the presence of or after at least one abiotic stress, wherein said composition is applied to the plant during or after an abiotic stress.

As used herein, the term "biomass" refers to the amount of a tissue produced from the plant in a growing season, which could also determine or affect the plant yield or the yield per growing area. An increase in plant biomass can be in the whole plant or in parts thereof such as aboveground (harvestable) parts, vegetative biomass, roots and seeds. The "plant biomass" is often measured as the dry mass or weight (or "fresh weight" where appropriate) of the plant.

As used herein the term "plant yield" refers to the amount (e.g., as determined by weight or size) or quantity (numbers) of tissues or organs produced per plant or per growing season.

In the context of the present disclosure, the development of the plants results, for example, in the improvement of at least one of the following parameters after the abiotic stress: biomass, yield, number of nodes, nitrogen balance, number of pods, flavanol and anthocyanin content, height of plants, rod diameter, photosynthetic activity, raw or dry-above ground biomass, fresh or dry root biomass, content of mineral elements, number of flowers. Number of fruits or weight of grains.

The composition of the present disclosure comprising the yeast extract (such as a hydrolyzed yeast extract) can be applied to a plant and/or plant part thereof or soil in a dose ranging from 0,25 to 5 L/ha per application. The application is a foliar application.

The terms "comprising" or "to comprise" and their conjugations, as used herein, refer to a situation wherein said terms are used in their non-limiting sense to mean that items following the word are included, but items not specifically mentioned are not excluded. It also encompasses the more limiting verb "to consist essentially of" and "to consist of".

Reference to an element by the indefinite article "a" or "an" does not exclude the possibility that more than one of the elements is present, unless the context clearly requires that there be one and only one of the elements. The indefinite article "a" or "an" thus usually means "at least one".

The following example serves to further describe and define the invention and is not intended to limit the invention in any way.

### EXAMPLE 1: Preparation of the hydrolyzed yeast extract of the present disclosure

Industrial cream yeast (20% of dry matter) comprising whole yeast cells from a yeast strain of *Saccharomyces cerevisiae* (Lallemand) was obtained and subjected to centrifugation in order to concentrate the yeast cream as much as possible. The pH of the yeast cream is adjusted with NaOH to 5 to 6.5. A protease is added the yeast cream. The mixture was incubated at a temperature of 40°C to 60°C for 5 to 15 hours. The hydrolyzed yeast cream was centrifuged, and the insoluble fraction (comprising the cell walls) were separated from the soluble yeast extract. The produced yeast extract had a solid content of 4 to 6% and was subjected to a vacuum evaporator. It was also filtered. The soluble yeast extract was evaporated until 45-50% solids. The resulting concentrated yeast extract was further subjected to an enzymatic hydrolysis with a protease. The hydrolysis was performed at a temperature of 40°C to 60°C for 5 to 15 hours at a pH of 4.5 to 6.5 under constant stirring. After the hydrolysis period, the temperature was raised to 70-75°C to inactive the enzymes. The resultant hydrolyzed yeast extract from *S*. *cerevisiae* contains a high concentration in free amino acids and low molecular weight peptides. It is a liquid formulation with at least 50% of dry matter.

### EXAMPLE 2: Effects of the hydrolyzed yeast extract on soybean plants underwater stress conditions

The objective of this study was to evaluate the effect of the foliar application of the hydrolyzed yeast extract on physiology and yield of soybean plants subjected to water stress. The hydrolyzed yeast extract was applied after the plants have been subjected to water stress.

The hydrolyzed yeast extract was prepared as described in Example 1. The following treatments were tested: T1 negative control; T2 hydrolyzed yeast extract of Example 1 applied at a dose of 500 mL/ha; and T3 hydrolyzed yeast extract of Example 1 applied at a dose of 1000 mL/ha. An adjuvant Nimbus^{®} was added at a dose of 1 mUL.

A completely randomized block design with five treatments and seven repetitions was used. Plots consisted of eight rows (spaced 0.5 m), each seven meters long.

The test was carried out on soybean plants at R₁ stage. A foliar application was conducted using the following application method.

Equipment: CO₂-pressurized backpack sprayer equipped with a spray bar with six nozzles 0.5 meters equidistant;
Application rate: 120 L/ha;
Application nozzles: Hollow cone nozzle 015.

Application was conducted respecting the optimal conditions for application, i.e. avoiding temperature >28 °C, RH <60%, and wind speed between 3-6 Km/h.

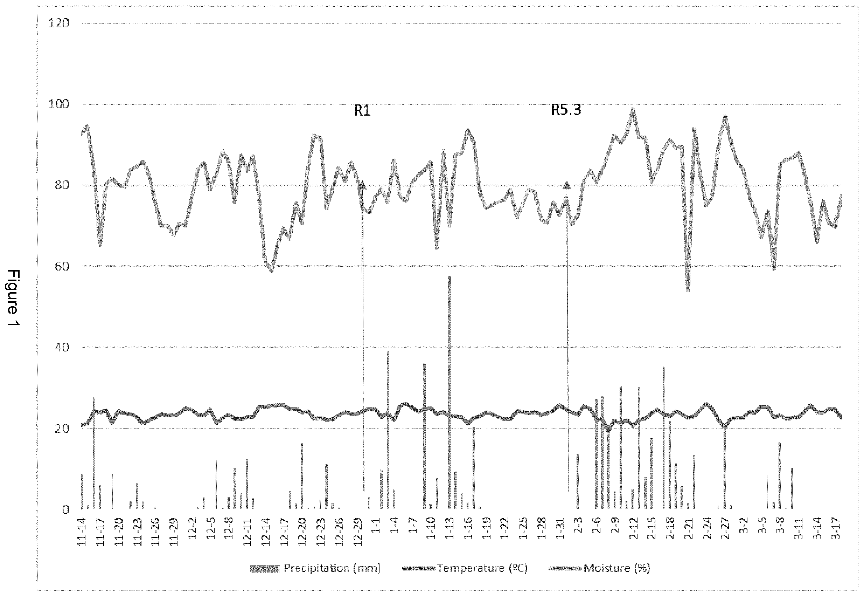

The trial took place over four months and the average temperature was 23.6°C and relative humidity 80%. Between the sowing and the treatment application, the average precipitation was 3,35 mm which is below required crop precipitation (5 mm minimum). After the application of the treatments, the precipitation reached 6,91 mm (Figure 1).

An evaluation of the effects of the hydrolyzed yeast extract was carried out in the four central rows. Each plot was composed by a buffer zone of 1 m in the end of the plot. Observations or measurements of the following parameters or characters were evaluated and statistically analyzed:
- Dualex in R₃ (pod development) and R_{5.3} (grain development): Ten points per plot, in the last trefoil fully open. The data was collected on the adaxial and abaxial sides of the central leaf of the trefoil at every point, avoiding leaf veins.
- Yield (full maturation): The four-meter length of the four central rows (8 m²) were harvested manually and processed mechanically to extract the grains. After that, the sample grains of each plot were weighted, and the moisture was determined. The yield estimation was adjusted at 13% of grain moisture.

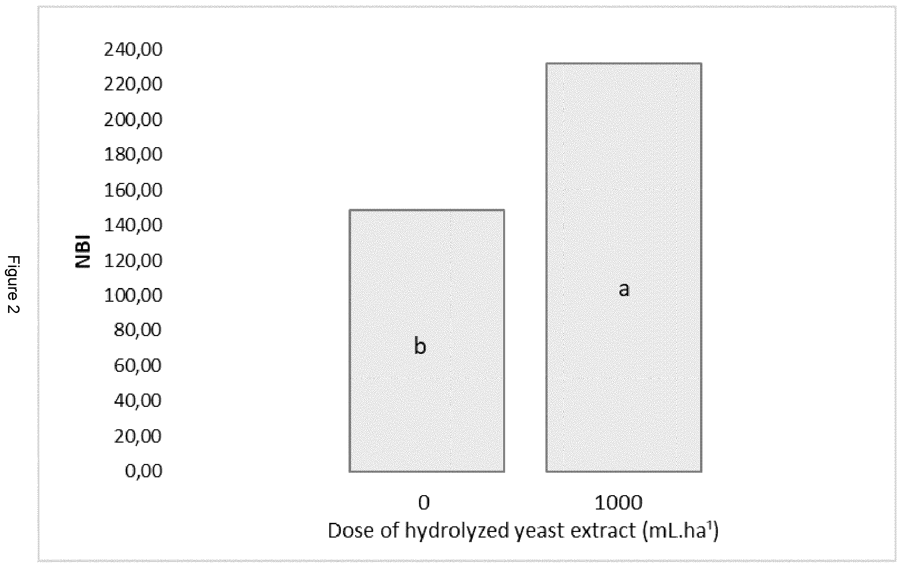

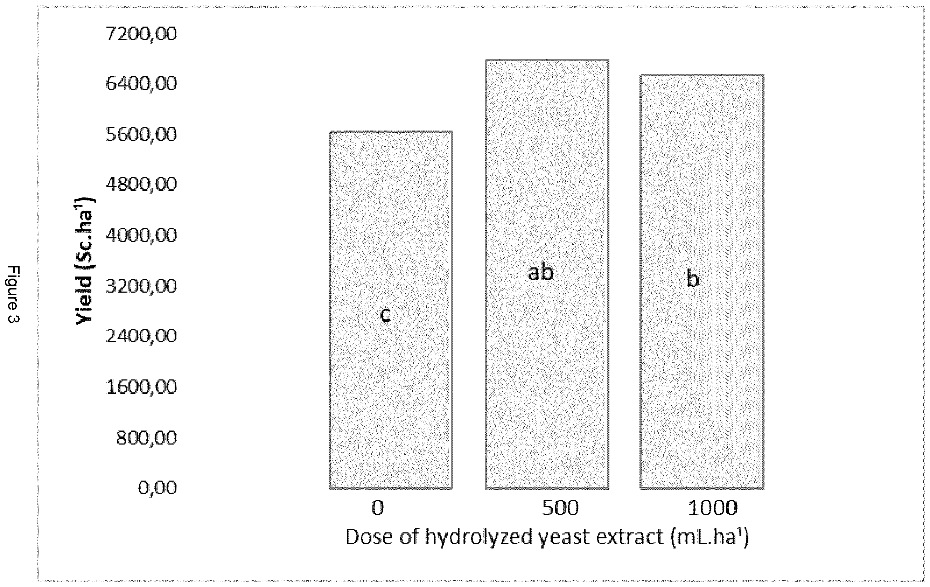

The results are presented in Figures 2 and 3 and indicate that the use of the hydrolyzed yeast extract after water stress conditions helped the soybean plants to recover and reduce the effect of the stress on plants as compared to the untreated control. More particularly, the use of the hydrolyzed yeast extract after the water stress significantly increased the nitrogen balance and yield of soybean plants compared to untreated controls.

### EMBODIMENTS OF THE INVENTION:

The invention can be described by means of the following embodiments.
1. A method for stimulating the development or increasing biomass or yield of a plant in the presence of or after at least one abiotic stress comprising contacting a plant, a plant part or soil with a yeast extract.
2. The method of embodiment 1, wherein the yeast extract is a hydrolyzed yeast extract.
3. The method of embodiment 2, wherein the hydrolyzed yeast extract is obtained by an enzymatic hydrolysis of the yeast extract.
4. The method of embodiment 3, wherein the enzymatic hydrolysis is carried out with a peptidase or a protease.
5. The method of any one of embodiments 1 to 4, wherein the yeast extract is obtained from yeasts of the genus *Saccharomyces.*
6. The method of embodiment 5, wherein the yeast is from the species *S*. *cerevisiae.*
7. The method of any one of embodiments 1 to 6, wherein the yeast extract is contacted with the plant after the abiotic stress occurred.
8. The method of any one of embodiments 1 to 7, wherein the plant is soybean plant, cotton, common beans, coffee, mango, or grapes, preferably the plant is soybean plant.
9. The method of any one of embodiments 1 to 8, wherein the abiotic stress is a water stress.
10. The method of any one of embodiments 1 to 9, wherein the contacting is carried out at a dose of between 0,25 L/ha to 5 L/ha.
11. Use of a yeast extract for stimulating the development or increasing biomass or yield of a plant in the presence of or after at least one abiotic stress.
12. The use of embodiment 11, wherein the yeast extract is a hydrolyzed yeast extract.
13. The use of embodiment 12, wherein the hydrolyzed yeast extract is obtained by an enzymatic hydrolysis of the yeast extract.
14. The use of embodiment 13, wherein the enzymatic hydrolysis is carried out with a peptidase or a protease.
15. The use of any one of embodiments 11 to 14, wherein the yeast extract is obtained from yeasts of the genus *Saccharomyces.*
16. The use of embodiment 15, wherein the yeast is from the species *S*. *cerevisiae.*
17. The use of any one of embodiments 11 to 16, wherein the yeast extract is contacted with the plant after the abiotic stress occurred.
18. The use of any one of embodiments 11 to 17, wherein the plant is soybean plant, cotton, common beans, coffee, mango, or grapes, preferably the plant is soybean plant.
19. The use of any one of embodiments 11 to 18, wherein the abiotic stress is a water stress.
20. The use of any one of embodiments 11 to 19, wherein the contacting is carried out at a dose of between 0,25 L/ha to 5 L/ha.

## Claims

1. A method for stimulating the development or increasing biomass or yield of a plant in the presence of or after at least one abiotic stress comprising contacting a plant, a plant part or soil with a yeast extract.

2. The method of claim 1, wherein the yeast extract is a hydrolyzed yeast extract.

3. The method of claim 2, wherein the hydrolyzed yeast extract is obtained by an enzymatic hydrolysis of the yeast extract, optionally wherein the enzymatic hydrolysis is carried out with a peptidase or a protease.

4. The method of any one of claims 1 to 3, wherein the yeast extract is obtained from yeasts of the genus *Saccharomyces.,* optionally wherein the yeast is from the species *Saccharomyces cerevisiae.*

5. The method of any one of claims 1 to 4, wherein the yeast extract is contacted with the plant after the abiotic stress occurred.

6. The method of any one of claims 1 to 5, wherein the plant is soybean plant, cotton, common beans, coffee, mango, or grapes, preferably the plant is soybean plant.

7. The method of any one of claims 1 to 6, wherein the abiotic stress is a water stress.

8. The method of any one of claims 1 to 7, wherein the contacting is carried out at a dose of between 0,25 L/ha to 5 L/ha.

9. Use of a yeast extract for stimulating the development or increasing biomass or yield of a plant in the presence of or after at least one abiotic stress.

10. The use of claim 9, wherein the yeast extract is a hydrolyzed yeast extract, optionally wherein the hydrolyzed yeast extract is obtained by an enzymatic hydrolysis of the yeast extract, such as wherein the enzymatic hydrolysis is carried out with a peptidase or a protease.

11. The use of claims 9 or 10, wherein the yeast extract is obtained from yeasts of the genus *Saccharomyces,* optionally wherein the yeast is from the species *Saccharomyces cerevisiae.*

12. The use of any one of claims 9 to 11, wherein the yeast extract is contacted with the plant after the abiotic stress occurred.

13. The use of any one of claims 9 to 12, wherein the plant is soybean plant, cotton, common beans, coffee, mango, or grapes, preferably the plant is soybean plant.

14. The use of any one of claims 9 to 13, wherein the abiotic stress is a water stress.

15. The use of any one of claims 9 to 14, wherein the contacting is carried out at a dose of between 0,25 L/ha to 5 L/ha.
